# EUROPEAN PATENT APPLICATION

(11) **EP 3 863 173 A1**
(43) Date of publication of application: **11.08.2021**
(21) Application number: 20155794.9
(22) Date of filing: 06.02.2020
(51) Int. Cl.: H02P 29/60

(54) **METHOD AND DEVICE FOR MEASURING THE TEMPERATURE OF THE WINDINGS OF A ROTOR OF A MOTOR**

(71) Applicant: Mitsubishi Electric R & D Centre Europe B.V., 1119 NS Schiphol Rijk (NL); Mitsubishi Electric Corporation, Tokyo 100-8310 (JP)
(72) Inventor: PERRIN, Rémi, 35708 RENNES Cedex 7 (FR); BUENO MARIANI, Guilherme, 35708 RENNES Cedex 7 (FR); MOLLOV, Stefan, 35708 RENNES Cedex 7 (FR)
(74) Representative: Cabinet Le Guen Maillet

(57) **Abstract**

The present invention concerns a method and a device for measuring the temperature of the windings of a rotor of a motor, the motor being a brushless wounded rotor synchronous machine that is composed of a switching cell (20) composed of transistors that are controlled by a zero voltage or current controller (70), a resonant tank (30) that is associated with a rotary transformer (40), the secondary of the rotary transformer (40) being connected to a rectifier (50) that provides DC current to the rotor windings (60). The invention :
- obtains the switching frequency provided by the zero voltage or current controller (70) to the switching cell,
- determines the temperature of the windings of the motor from the obtained switching frequency.

## Description

### TECHNICAL FIELD

The present invention relates generally to a device and a method for measuring the temperature of the windings of a rotor of a motor.

### RELATED ART

The diagnostic of a machine has become very important in the latest years. The search for reducing down production time and plan interventions before time has become really important.

Wounded Rotor Synchronous Machines (WRSM) are machines that need the rotor to be fed either by brushes or by a rotary transformer. Wounded Rotor Synchronous Machines the rotor of which is fed by a rotary transformer are named Brushless Wounded Rotor Synchronous Machines (BWRSM).

The temperature of the windings of the rotor of a motor may provide information about the state or the ageing of the motor and may enable preventive actions before the motor fails. A faster temperature transient than usual may also allow a failure detection.

Measuring aspects on a rotating object is not easy for some aspects such as ensuring that the sensors or electrical parts needed, are safe and will not fall out with the rotations of the object. Also the transmission of the data between the rotating part and the stationary part is really difficult, as well as the transmission of the power supply through the isolation, needed to supply the autonomous sensor.

### SUMMARY OF THE INVENTION

The present invention aims to provide a method and a device for measuring the temperature of the rotor of a motor without any aditional elements that have to be added on the rotor of the motor.

To that end, the present invention concerns a device for measuring the temperature of the windings of a rotor of a motor, the motor being a brushless wound rotor synchronous machine that is composed of a switching cell composed of transistors that are controlled by a zero voltage or current controller, a resonant tank that is associated with a rotary transformer, the secondary of the rotary transformer being connected to a rectifier that provides DC current to the rotor windings, characterized in that the device comprises :
- means for obtaining the switching frequency provided by the zero voltage or current controller to the switching cell,
- means for determining the temperature of the windings of the motor from the obtained switching frequency.

The present invention concerns also a method for measuring the temperature of the windings of a rotor of a motor, the motor being a brushless wound rotor synchronous machine that is composed of a switching cell composed of transistors that are controlled by a zero voltage or current controller, a resonant tank that is associated with a rotary transformer, the secondary of the rotary transformer being connected to a rectifier that provides DC current to the rotor windings, characterized in that the method comprises the steps of :
- obtaining the switching frequency provided by the zero voltage or current controller to the switching cell,
- determining the temperature of the windings of the motor from the obtained switching frequency.

Thus, the present invention enables to measure the temperature of the rotor of a motor without any aditional elements that have to be added on the rotor of the motor.

According to a particular feature, the obtained switching frequency is the switching frequency for a maximum current provided to the motor windings.

According to a particular feature, the device further comprises:
- means for obtaining the switching frequency at the maximum current provided to the motor windings at two different temperatures of the motor,
- means for determining the coefficients of a linear function according to the obtained switching frequencies at the maximum current provided to the motor windings at two different temperatures of the motor,
- means for determining the temperature of the windings of the motor from the coeffcients of the linear function.

According to a particular feature, the ageing of the motor is determined from the determined temperature or a failure of the motor is determined from an unexpected determined temperature transient.

### BRIEF DESCRIPTION OF THE DRAWINGS

The characteristics of the invention will emerge more clearly from a reading of the following description of example embodiments, the said description being produced with reference to the accompanying drawings, among which:
Fig. 1 represents an example of a rotary transformer controller in which the present invention is implemented;
Fig. 2 represents normalized switching frequency variations and current variations that are dependent of the temperature of the windings of the motor;
Fig. 3 represents an architecture of the device for determining the temperature of the windings of a motor;
Fig. 4 represents an algorithm for determining the temperature of the widdings of a motor.

### DESCRIPTION

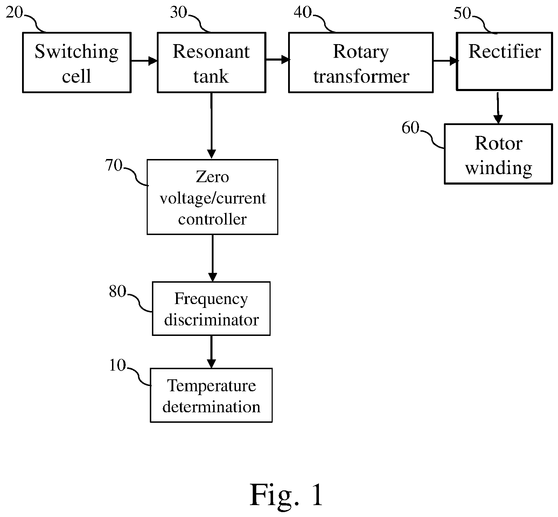

**Fig. 1** represents an example of a rotary transformer controller in which the present invention is implemented.

The rotary transformer controller is composed of a switching cell 20 composed of transistors that are controlled by a zero voltage or current controller 70, a resonant tank 30 that is associated with a rotary transformer 40. The secondary part of the rotary transformer 40 is connected to a passive or active rectifier 50 that provides DC current to the rotor windings 60 that are fed with the DC current.

The switching cell 20 is controlled by the zero voltage or current controller 70 that provides a soft switching mode. The zero voltage or current controller 70 is achieving a zero current detection with a shunt or any current sensing technique at the primary side of the rotary transformer. The switching frequency is thus determined by the resonant tank 30 and the current that is fixed by the load at the secondary of the rotary transformer.

Since the resistance of the rotor windings depends on the temperature, the current on the secondary of the rotary transformer 40 changes with the temperature. If the secondary current changes, the primary current changes accordingly.

Then, if the primary current of the rotary transformer 40 changes, the switching frequency changes, due to the resonant tank. So the switching frequency determined by the zero voltage or current controller 70 gives an indicator on the temperature of the rotor windings.

The switching frequency is provided by the zero voltage or current controller 70 to a frequency discriminator 80 that provides the resonant frequency to a temperature determination module 10.

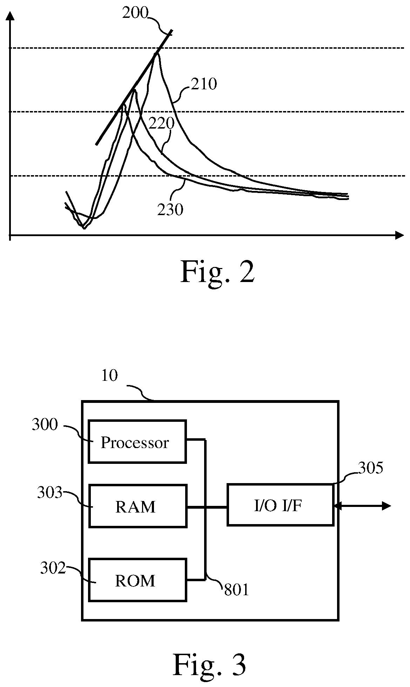

**Fig. 2** represents normalized switching frequency variations and current variations that are dependent of the temperature of the windings of the motor.

In the example of Fig. 2, the horizontal axis represents normalized frequency variations and the vertical axis represents current variations. The switching frequency variation is directly linked to the resistance of the rotor windings 60 at the secondary of the rotary transformer 40. For a given resonant tank, the resonant frequency tracks the load variation with an optimal point as shown in Fig. 2. In the example of Fig. 2 each curve noted 210, 220 and 230 represents switching frequency variation at a different temperature.

According to a particular feature, a calibration phase may occur in order to establish the link between the temperature and the switching frequency. Two sets of measurements can be made at ambient temperature (25°C) and a higher motor winding temperature in order to obtain two references that provide coefficients a and b of a linear function y=ax+b noted 200 in Fig. 2.

For example, the maximum normalized switching frequency is equal to 0.36 at 25°C, 0.39 at 45°C, 0.43 at 75°C and 0.47 at 100°C.

During operation, a linear extrapolation is then made to determine the temperature impact on the frequency.

It has to be noted here that this calibration step is not necessary but allows to improve the measurement accuracy.

A temperature variation from a given temperature value may also be provided.

**Fig. 3** represents an architecture of the device for determining the temperature of the windings of a motor.

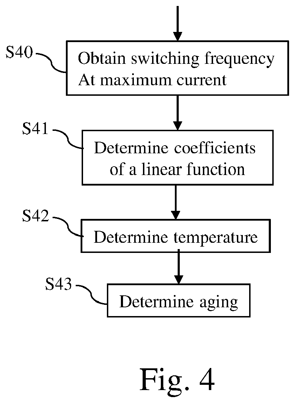

The device 10 has, for example, an architecture based on components connected together by a bus 301 and a processor 300 controlled by a program as disclosed in Fig. 4.

The bus 301 links the processor 300 to a read only memory ROM 302, a random access memory RAM 303, and an input output interface 305.

The memory 903 contains registers intended to receive variables and the instructions of the program related to the algorithm as disclosed in Fig. 4 and coefficient of the linear function.

The read-only memory, or possibly a flash memory 302, contains instructions of the program related to the algorithm as disclosed in Fig. 4.

When the device 10 is powered on, the instructions stored in the memory 302 are transferred to the random access memory 303.

The device 10 may be implemented in software by execution of a set of instructions or program by a programmable computing machine, such as a PC (*Personal Computer*), a DSP (*Digital Signal Processor*) or a microcontroller; or else implemented in hardware by a machine or a dedicated component, such as an FPGA (*Field-Programmable Gate Array*) or an ASIC (*Application-Specific Integrated Circuit*)*.*

In other words, the device 10 includes circuitry, or a device including circuitry, enabling the system 90 to perform the program related to the algorithm as disclosed in Fig. 4.

**Fig. 4** represents an algorithm for determining the temperature of the windings of a motor.

The present alogorithm is executed by the device 10.

At step S40, the device 10 obtains the switching frequency provided by the zero voltage or current controller (70) to the switching cell.

More particularly, the device 10 obtains the switching frequency at the maximum current provided to the motor windings at two different temperatures of the motor.

At step S41, the device 10 determines the coefficients of a linear function according to the obtained switching frequencies at the maximum current provided to the motor windings at two different temperatures of the motor.

At step S42, the device 10 determines the temperature of the windings of the motor from the obtained swtiching frequency.

At step S43, the determined temperature is used for determining the ageing of the motor, for example in order to prevent a failure of the motor during the operation of the motor and/or the determined temperature is used for determining a failure of the motor from an unxepected determined temperature transient.

Naturally, many modifications can be made to the embodiments of the invention described above without departing from the scope of the present invention.

## Claims

1. A device for measuring the temperature of the windings of a rotor of a motor, the motor being a brushless wounded rotor synchronous machine that is composed of a switching cell (20) composed of transistors that are controlled by a zero voltage or current controller (70), a resonant tank (30) that is associated with a rotary transformer (40), the secondary of the rotary transformer (40) being connected to a rectifier (50) that provides DC current to the rotor windings (60) **characterized in that** the device comprises:
- means for obtaining the switching frequency provided by the zero voltage or current controller (70) to the switching cell,
- means for determining the temperature of the windings of the motor from the obtained swtiching frequency.

2. The device according to claim 1, **characterized in that** the obtained switching frequency is the switching frequency for a maximum current provided to the motor windings.

3. The device according to claim 2, **characterized in that** the device further comprises:
- means for obtaining the switching frequency at the maximum current provided to the motor windings at two different temperatures of the motor,
- means for determining the coefficients of a linear function according to the obtained switching frequencies at the maximum current provided to the motor windings at two different temperatures of the motor,
- means for determining the temperature of the windings of the motor from the coefficients of the linear function.

4. A method for measuring the temperature of the windings of a rotor of a motor, the motor being a brushless wound rotor synchronous machine that is composed of a switching cell (20) composed of transistors that are controlled by a zero voltage or current controller (70), a resonant tank (30) that is associated with a rotary transformer (40), the secondary of the rotary transformer (40) being connected to a rectifier (50) that provides DC current to the rotor windings (60) **characterized in that** the method comprises the steps of :
- obtaining the switching frequency provided by the zero voltage or current controller (70) to the switching cell,
- determining the temperature of the windings of the motor from the obtained swtiching frequency.

5. The method according to claim 4, **characterized in that** the obtained swtiching frequency is the switching frequency for a maximum current provided to the motor windings.

6. The device according to claim 5, **characterized in that** the method further comprises the steps of :
- obtaining the switching frequency at the maximum current provided to the motor windings at two different temperatures of the motor,
- determining the coefficients of a linear function according to the obtained switching frequencies at the maximum current provided to the motor windings at two different temperatures of the motor,
- determining the temperature of the windings of the motor from the coeffcients of the linear function.

7. The device according to claim 6, **characterized in that** the method further comprises the step of determining the ageing of the motor from the determined temperature or determining a failure from an unexpected determined temperature transient.
